# EUROPEAN PATENT SPECIFICATION

(11) **EP 0 569 474 B1**
(45) Date of publication and mention of the grant of the patent: **17.08.1994**
(21) Application number: 92904644.9
(22) Date of filing: 21.01.1992
(51) Int. Cl.: A23F 5/26

(54) **PROCESS OF EXTRACTING ROASTED AND GROUND COFFEE**
VERFAHREN ZUM EXTRAHIEREN VON GERÖSTETEM UND GEMAHLENEM KAFFEE
PROCEDE D'EXTRACTION DE CAFE MOULU ET TORREFIE

(30) Priority: 28.01.1991 DK 147/91
(43) Date of publication of application: 18.11.1993
(73) Proprietor: NIRO HOLDING A/S, DK-1260 Copenhagen K (DK)
(72) Inventor: LARSEN, Torben, Brinch, DK-2970 Horsholm (DK)
(74) Representative: Simonsen, Christian Rosendal
(86) International application number: DK9200016
(87) International publication number: WO9212644

(56) References cited:
- US-A- 2 340 758
- US-A- 2 931 728
- US-A- 3 420 674
- US-A- 3 549 380
- US-A- 4 701 333
- US-A- 4 707 368

## Description

The present invention relates to a process of extracting roasted and ground coffee for obtaining a coffee extract, mainly for use as a starting material for producing a soluble coffee powder, normally called instant coffee or powdery coffee.

A considerable economic interest exist in industrial coffee extraction producing a coffee extract for use as such or for the manufacture of a soluble coffee powder. This is due not only to the fact that the latter product is easier to use for the consumers than ground, roasted coffee, but also to the fact that industrial extraction makes it possible to obtain a far better utilization of the coffee than what is possible with the extraction methods normally used in a household.

A survey of the known methods for industrial coffee extraction is found in M. Sivetz and H. Elliott Foote: Coffee Processing Technology, The AVI Publishing Company, Inc., Westport, Connecticut (1963), volume 1, as well as in R.J. Clarke and R. Macrae: Coffee, Elsevier Applied Science, London (1987), volume 2.

To attain a high extract yield the extraction is carried out at temperatures above 100°C and during several hours.

Normally extraction batteries consisting of several extractors are used, said extractors being connected in such a way that a counterflow-like extraction process is achieved, in which fresh extraction water is transferred to the extractor, which holds the coffee that has been extracted for the longest time, while the extract, which is recovered from said extractor, is transferred to the extractor, which holds the coffee that has been extracted for the second longest period of time and so on, until the final extract is recovered from the extractor, which holds the coffee that has been extracted for the shortest period of time.

Due to the long duration of the extraction and the high temperatures used in the industrial coffee extraction, there is a risk that the quality of the extract will be impaired due to damaging oxidation processes and loss of desired aroma components.

Various principles have been suggested with respect to the construction of the individual extractors. Thus British Patent No. 620383 discloses an arrangement, in which the recirculating extraction fluid is sprayed over the coffee, while it is kept in a bag, so that the passage of the extraction fluid through the ground coffe will take place due to the gravitational effect.

Such an extractor unit has, however, an unsatisfactorily low extraction capacity in relation to the volume of the unit and the manufacturing costs thereof, and it is unsuitable for the production of extracts with a high content of dry matter and consequently relatively high viscosity.

It is therefore preferred as extraction units to use extractors, which are substantially completely filled up with coffee and then subsequently supplied with extraction liquid to fill out the interspaces between the coffee particles, since with such extractors it is easier to control the liquid flow rate in relation to the coffee particles by adjusting the difference between the pressure, at which the extract is supplied and the pressure, at which it is recovered.

The most efficient extraction is achieved with a high liquid flow. The possibility of retaining a high liquid flow is, however, limited for several reasons. Thus, there is a tendency that a compact layer of relatively fine coffee particles will be created close to the place, at which the extract is recovered, said layer yielding considerable resistance towards the liquid flow, and which resistance cannot be surpassed by increasing said difference of pressure.

To counteract this tendency it has been suggested in US Patent no. 2,931,728 to place a layer of fairly coarse particles near the place of recovery for the extract.

Even though this measure to some extent increases the possibility of maintaining a high liquid flow, it turns out, however, that even when such a layer of coarse particles is used, problems will arise with respect to maintaining the liquid flow at a sufficiently high level, as the resitance towards the flow of the liquid through the coffee mass is increased due to reasons not previously fully realized.

According to the conventional extraction process, which has been described by Sivetz et al., loc. cit., the ground coffee is introduced into the air-filled extractor, whereafter the hot extraction liquid is introduced, the air present in the extractor being displaced.

As, however, a considerable heating of the coffee takes place before the air displament has ended, high amounts of aromatic substances from the coffee are carried off with the air during its displament.

To prevent these aromatic substances from being wasted, the displaced air is let through a freezing trap for collection of the desired components. This collection of the desired aromatic components from the displaced air is, however, complicated by the fact that the aromatic substances are mixed with so high amounts of air and water vapour, as is the case, for which reason several cooling steps and very low temperatures are required, which makes this recovery a considerably cost-consuming complication in the extraction process.

An embodiment of such an aroma recovery process is the subject of US Patent No. 4,606,921.

Furthermore, processes having a certain similarity to these aroma recovery processes are known, but in which the coffee intentionally is subjected to a pre-treatment for removal of aromatic substances prior to the extraction, with a view of bringing back the aromatic substances to the attained extract. This aroma removal is according to European Patent No. 227,262 and US Patent No. 4,707,368 carried out by means of a vapour treatment under vacuum.

Roasted, ground coffe beans, in the present specification often just termed coffee, typically contain 6-7% moisture. As this material is diffcult to wet with the coffee extract, with which it is to be extracted, it is known to carry out a pre-wetting of the coffee by water, cf. US Patent No. 2,340,758 and Sivetz et al., loc. cit. The latter states that this wetting may take place before, but preferably after, the introduction of the coffee into the extractor.

Also US specification no. 4,701,333 deals with a pre-wetting of the coffee, which apparently is performed stepwise using totally at least two parts by weight of water for each part of coffee, before the wetted coffee is transferred to an extractor.

A pre-wetting process for coffee is also disclosed in US specification no. 3,549,380. According to said process an aqueous liquid is sprayed onto the coffee, as it is being loaded into an exctraction column. However, such a procedure is less suitable in the process according to the present invention, as described below, where a very intimate admixture of pre-wetting water and coffee is essential.

It should further be observed that it has been suggested (US specification 3,420,674) to reduce the acid content of steamed coffee by vacuum treatment before extraction, to improve the flavour of the final product.

It has now turned out that by carrying out the extraction as described below according to the invention a considerable increase of the liquid flow in the extractor and a correspondingly shorter extraction time are achieved, and the hitherto used operations for recovery of aromatic substances are made superfluous.

The present invention accordingly relates to a process for extracting roasted and ground coffee in an extractor, according to which process the coffee is pre-wetted before being transferred to the extractor, which process according to the invention is characteristic in that
a) the coffee is wetted by admixture of water at a temperature between 20 and 100°C to obtain a water content of 20-50% by weight,
b) the wetted coffee is transferred to an oblong extractor to essentially fill the extractor therewith,
c) gases and water vapour is evacuated from the extractor to obtain a pressure of between 600 millibar and a value corresponding to the vapour pressure of water at the temperature, which the wetted coffee obtains as a result of the mixing according to step a),
d) without any further evacuation of gases and water vapour a hot, aqueous extraction liquid is introduced at one end of the evacuated extractor to fill it, and extraction is carried out at temperatures above 100°C, and in that
e) an aqueous extract containing both volatile flavour components as well as non-volatile coffee components is removed from the other end of the extractor.

In preferred embodiments of the process according to the invention water having a temperature of 50-100°C is used for the wetting according to step a), and when evacuating the exctractor according to step c) the pressure is reduced to a value corresponding to the vapour pressure of water, which the wetted coffee obtains as a result of the mixing with hot water according to step a). By these measures a particularly efficient deaeration of the coffe is obtained in the following step c).

The reason why essentially higher liquid flows are achieved by means of the process according to the present invention and subsequent shorter extraction times than by conventional processes is supposed to be fact that by the evacuation according to step c) an effective removal of the amount of air present in the extractor as well as an effective displacement of carbon dioxide from the inner of the coffee grains are achieved as a result of the vaccum, and by introducing the extraction liquid without the coffee having in the meantime been in contact with air, formation of essential amounts of foam in the extraction liquid is avoided. Tests in special testing equipment have shown, that if the measures in question are not taken, colour changes may appear in certain parts of the exctractor, which indicates the formation of a foam of very fine bubbles. This foam reduces the ability of the extraction liquid to disperse among the coffee particles, and drastically increases the resitance towards the liquid flow through the bed of coffee particles.

A treatment with vapour and vacuum like the one previously suggested for expelling volatile components, cf. the above European Patent No. 227,262 and US Patent No. 4,707,368, cannot prevent such a formation of foam, as an absorption of atmospheric air in the period of time between the treatment and the contact with the extraction liquid presumably takes place.

Furthermore, it should be noted, that the process suggested according to the British Patent No. 620,383 for the protection of the coffee against oxidation, by creating a vaccuum in the extractor after the introduction of the coffee, but before the introduction of the extraction liquid, if it was used in connection with a process of the kind being the subject matter of the present invention, would not prevent the formation of foam in question, as such a vacuum treatment in the extractor itself with a maintenance of the vacuum until the introduction of the extraction liquid, would not per se be able to prevent the formation of foam at the succeeding extraction, as the vacuum treatment takes place without any pre-wetting of the coffee by hot water, and the coffee will not therefore during the succeeeding introduction of hot extraction liquid be wetable thereby without the formation of foam.

The evacuation of gases and water vapour from the extractor, which is carried out in step c) before the introduction of the hot extraction liquid, takes place at such a low temperature and at such a speed that the amount of aromatic substances, which is removed from the coffee, is small, and consequently no recovery will be needed. When the hot extraction liquid in step d) is introduced into the extractor, there is no need to drive off air therefrom, and the above problem concerning recovery of aroma from the expelled air therefore does not exist.

The extract resulting from the process thus already contains the volatile aromatic components, which, according to the conventional methods are admixed with the extract after the recovery of this, possibly after a further processing of the extract.

In a preferred embodiment of the process the roasted, grounded coffee is prior to the wetting in step a) subjected to a sifting to divide the coffee into a coarse fraction and a fine fraction, the coarse fraction constituting 1-10% by weight of the amount of coffee, while the fine fraction constitutes the remainder, whereafter the two fractions are wetted separately and according to step b) introduced in such a way that the coarse fraction is placed at the end of the extractor, from which the extract is removed. The sifting is preferably carried out by means of a sieve having a mesh size of 2-4 mm. By using this measure, which per se is known from the above US Patent No. 2,931,728, it is possible to fully exploit the reduction of the resistance against the liquid flow through the bed of pulverized coffee, said reduction being achieved due to the fact that the formation of foam is avoided.

It is thus possible by controlling the amount of extraction liquid, which is introduced into the extractor, to carry out the extraction with a liquid flow of 20-50 m/h, calculated on basis of the amount of liquid passing through the extractor, and the area of a section perpendicular to the flow path through the extractor, the presence of the coffee being left out of consideration.

In a preferred embodiment of the process the extractor is part of a battery of several extractors connected in series in a manner known per se in such a way that hot water under pressure is introduced into the extractor containing the coffee, which has been extracted for the longest period of time, while the final extract is recovered from the extractor, which is the last one to have been filled with wetted coffee, water is supplied at a temperature of 160-190°C and in that the coffee is removed from the extractor after the extraction of 45-60% by weight of its dry matter at an extraction time of 1-2 1/2 hours.

Contrary to this the known extraction processes for obtaining extraction yields of the same size and with the use of similar temperatures requires extraction times of approx. 4 hours.

The extract attained has a good flavour and a good smell, as nearly all the aromatic components of the originally roasted coffee have been retained in the extract, as they have not been driven off when the extractors were filled with liquid, and in particular because of the fairly short extraction time it maintains the desired nuances as to flavour better than is the cases with the conventional, more protracted processes.

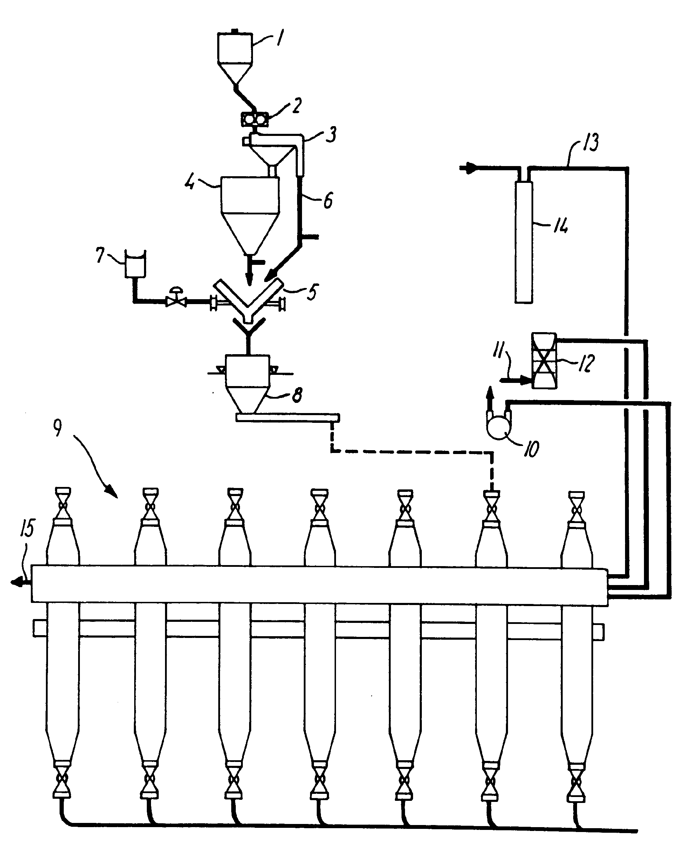

The process according to the invention will be desribed in detail in the following with reference to the accompanying drawing, which shows a plant suited for carrying out the process.

In the drawing a silo 1 for roasted coffee beans is shown, from which they are transferred to a coffee mill 2. From there the ground coffee is transferred to a sieve 3 with a mesh size, which is typically 2-4 mm.

The fraction of the ground coffee, which passes through the sieve 3 and which makes out by far the major amount of coffee, is collected in a silo 4, which is installed in such a way that its content can be transferred to a mixing apparatus 5 serving as a pre-wetter.

From the sieve 3 a conduit 6 is leading, through which the fraction of the coffee retained on the sievfe, can be conveyed to the mixing apparatus 5.

The mixing apparatus 5 is connected to a container 7 for water having a temperature between 20 and 100°C, for wetting the ground coffee in the mixing apparatus 5.

From the container 7 hot water is transferred to the mixing apparatus for the attainment of a moisture content in the coffee of 20-50% by weight, preferably approx. 30% by weight.

As will be seen, the plant makes it possible to wet separately the relatively fine fraction, which is conveyed to the mixing appratus 5 via the silo 4, and the relatively coarse fraction, which is conveyed through the pipe 6.

From the mixing apparatus 5 the wet coffe is transferred to a weighing silo 8 and from there to an extractor, which forms part of an extraction battery 9 having in the shown embodiment seven extractors.

When filling an extractor with pre-wetted coffee it is advantageous, if the extraction liquid is to be conveyed from the top of the extractor to the bottom thereof, to initially introduce the coarse fraction of the ground coffee, which via the pipe 6 is conveyed to the mixing apparatus 5, and then to fill up the extractor with the finer fraction of the ground coffee conveyed to the mixing apparatus 5 from the silo 4.

The extractors are all connected to a vacuum pump 10.

When an extractor has been filled with coffee, the connection between the extractor and the vacuum pump is opened and the pump is started for evacuating inter- and intraparticular air and gas. In the preferred embodiment a relatively quick evacuation is performed, which is continued until a pressure has been achieved which corresponds to the steam pressure of water at the temperature prevailing in the extractor. The attainment of this pressure can be seen thereby that continued evacuation will not result in any essential further pressure drop in the extractor.

When the pressure has been reduced to this value, the evacuation is stopped in order to prevent volatile aroma components from being carried off.

It is essential for the attainment of the ocbject of the invention that an extraction liquid is then introduced into the extractor, without any possibility having existed in the meantime for air to penetrate into the evacuated extractor.

As extraction liquid to be introduced into the evacuated extractor a hot coffee extract from another extractor in the extraction battery can be used, but it is preferred, that the extraction liquid, which is the first to get in contact with the wetted coffee, is hot water, which will then subsequently be replaced by coffee extract, which has passed the remaining extractors of the extraction battery. Thereby it is achieved that the resulting coffee extract gets a flavour and an aroma simliar to freshly made coffee from a household.

The drawing shows a supply pipe 11 for water for this initial filling of the extractors. This water is pre-heated in a heat exchanger 12 at a temperature of typically 120°C.

When the extractor is thus filled with hot water, it is in a manner known per se inserted in the extraction battery, so that in its upper part extract from the bottom of the extractor, in which the coffee has stayed for the shortest period, will be introduced.

To the top of the extractor, in which the coffee has been under extraction for the longest period, water is supplied through a pipe 13 heated to for instance 160-180°C in a heating device 14.

One of the extractors will typically be in the process of being emptied or being filled and consequently disconnected from the circulation in the extraction battery. The extract leaving this battery through a pipe, shown by 15 in the drawing, is thus partly made up from extract, which has passed six extractors, partly from the extract resulting from the relatively short contact of the water first supplied with the freshly introduced coffee.

The operation of the extraction battery is otherwise carried out in a completely traditonal way as to conveyance of the liquid, the emptying of the extractors, etc.

The process according to the invention will be illustrated further by means of the folowing Example.

### EXAMPLE

As starting material in this example 247.0 kg roasted coffee of Robusta-type was used. The roasted coffee contained 6% water, corresponding to an amount of dry matter of 232.18 kg. After grinding the coffee was sifted through a sieve with a mesh size of 3.5 mm. On the sieve 9.52 kg coarsely ground coffee corresponding to 4.1% was retained, while the fraction passing the sieve amounted to 237.48 kg.

Each of the two fractions of ground coffee was wetted by being mixed for approx. 15 minutes using one part by weight of boiling water for two parts by weight of coffee. The resulting mixture, which looked like dry ground coffee had a temperature of approx. 55°C.

The extraction itself took place in a pilot battery consisting of seven extractors, each with a length of approx. 4 meter and an inner diameter of 57 mm, correspondig of a volume of 10.2 liter.

After the filling of an extractor with coffee, first the coarse fraction and then the finer one, the extractor was exposed to vacuum corresponding to approx. 150 m bar absolute pressure.

Without breaking the vacuum the extractor was then filled with water with a temperature of approx. 120°C.

The extractors were connected during operation for the attainment of a counter-current like extraction of the coffee as described above.

Every fifteenth minute an extractor was taken out of circulation, emptied and filled with fresh coffee as described above. To the extractor, in which the coffee had been extracted for the longest period of time, water at a temperature of 180°C and an absolute pressure of approx. 13 bar was added. The addition was made, as already said, to the extractor, which was leached to the highest degree, while the extract was recovered from the extractor with fresh coffee. The amount of water supplied amounted to approx. 83 l/h.

The test comprised 80 fillings of the extractors, corresponding to twenty hours of operation. During this period an amount of extract of 1637 kg with a content of dry matter of 128 kg was produced. This corresponds to a yield of 52.2% of the dry matter supplied in the roasted and ground coffee. The liquid flow in the extractors, calculated without regard to the presence of the coffee, amounted to approx. 32.5 m/h.

The extract yield had an excellent flavour and aroma and was better than the extract achieved according to conventional methods, for instance as described in the following example by way of comparison.

### Comparative Example

The way of proceeding was like in the Example, but without separation of the ground beans and without pre-wetting of the coffee and without exposure to vacuum of the extractors before the beginning of the extraction.

In this case it was not possible to obtain a liquid flow of more than 12 m/h, as attempts to increase the flow rate by increasing the supply pressure of the extraction liquid resultated in clogging problems. The yield was therefore only 47%. When the extraction was extended with a view of attaining a yield of the same size as the one gained in the Example, a prolongation of the residence time of the coffee in the extractors up to approx. 4 hours was required.

## Claims

1. A process for extracting roasted and ground coffee in an extractor, according to which process the coffee is prewetted before being transferred to the extractor, **characterized** in that
a) the coffee is wetted by admixture of water at a temperature between 20 and 100°C to obtain a water content of 20-50% by weight,
b) the wetted coffee is transferred to an oblong extractor to essentially fill the extractor therewith,
c) gases and water vapour is evacuated from the extractor to obtain a pressure of between 600 millibar and a value corresponding to the vapour pressure of water at the temperature, which the wetted coffee obtains as a result of the mixing according to step a),
d) without any further evacuation of gases and water vapour, a hot, aqueous extraction liquid is introduced at one end of the evacuated extractor to fill it, and extraction is carried out at temperatures above 100°C, and in that
e) an aqueous extract containing both volatile flavour components as well as non-volatile coffee components is removed from the other end of the extractor.

2. Process according to claim 1, **characterized** in that for the wetting according to step a) water having a temperature of 50-100°C is used.

3. Process according to claims 1 or 2, **characterized** in that when evacuating the extractor according to step c) the pressure is momentarily reduced to a value corresponding the the vapour pressure of water at the temperature, which the wetted coffee obtains as a result of the mixing according to step a).

4. Process according to claims 1, 2 or 3, **characterized** in that prior to the wetting according to step a) the roasted and ground coffee is sifted to divide the coffee into a coarse fraction and a fine fraction, the coarse fraction constituting 1-10% by weight of the amount of coffee, while the fine fraction constitutes the remainder, that the two fractions are wetted separately and according to step b) introduced in such a way that the coarse fraction is placed in the end of the extractor, from which the extract is removed.

5. Process according to claim 4, **characterized** in that the sifting is made by means of a sieve with a mesh size of 2-4 mm.

6. Process according to any of the preceding claims, **characterized** in that by controlling the amount of extraction liquid supplied to the extractor, the extraction is carried out with a liquid flow of 20-50 m/h, calculated on basis of the amount of liquid passing through the extractor and the area of a section perpendicular to the flow path through the extractor, the presence of the coffee being left out of consideration.

7. Process according to any of the preceding claims, in which the extractor is part of a battery of several extractors connected in series in a manner known per se in such a way that hot water under pressure is introduced into the extractor containing the coffee, which has been extracted for the longest period of time, while the final extract is recovered from the extractor, which is the last one to have been filled with wetted coffee, **characterized** in that water is supplied at a temperature of 160-190°C and in that the coffee is removed from the extractor after the extraction of 45-60% by weight of its solid matter at an extraction time of 1-2 1/2 hours.

## Patentansprüche

1. Verfahren zum Extrahieren von geröstetem und gemahlenem Kaffee in einem Extraktionsbehälter, bei welchem Verfahren der Kaffee vor der Einführung in den Extraktionsbehälter befeuchtet wird, dadurch **gekennzeichnet**, dass
a) der Kaffee durch Beimischen von Wasser mit einer Temperatur zwischen 20 und 100°C zwecks Erhalt eines Wassergehalts von 20-50 Gew.-% befeuchtet wird,
b) der befeuchtete Kaffee in einen länglichen Extraktionsbehälter geleitet wird, sodass dieser im wesentlichen gefüllt wird,
c) Gase und Wasserdampf aus dem Extraktionsbehälter ausgepumpt werden zum Erhalten eines Druckes zwischen 600 mbar und eines Wertes entsprechend dem Dampfdruck von Wasser bei der Temperatur, die der befeuchtete Kaffee als ein Resultat des Vermischens in Stufe a) erreicht,
d) ohne ein weiteres Auspumpen von Gasen und Wasserdampf eine heisse, wässrige Extraktionsflüssigkeit an einem Ende des evakuierten Extraktionsbehälters zu dessen Füllen eingeleitet wird, und Extraktion bei Temperaturen über 100°C durchgeführt wird, und dass
e) ein wässriger Extrakt, der sowohl flüchtige Aroma-Bestandteile als nicht flüchtige Kaffee-Bestandteile enthält, an dem anderen Ende des Extraktionsbehälters entnommen wird.

2. Verfahren nach Anspruch 1, dadurch **gekennzeichnet**, dass zum Befeuchten in Stufe a) Wasser mit einer Temperatur von 50-100°C benutzt wird.

3. Verfahren nach Anspruch 1 oder 2, dadurch **gekennzeichnet**, dass beim Evakuieren des Extraktionsbehälters in Stufe c) der Druck kurzweilig auf eine Temperatur entsprechend dem Dampfdruck von Wasser bei jener Temperatur, die der befeuchtete Kaffee als ein Resultat des Vermischens in Stufe a) erreicht, herabgesetzt wird.

4. Verfahren nach Anspruch 1, 2 oder 3, dadurch **gekennzeichnet**, dass vor dem Befeuchten in Stufe a) der geröstete, gemahlene Kaffee zur Trennung des Kaffees in eine grobe und eine feine Fraktion gesiebt wird, wobei die grobe Fraktion aus 1-10 Gew.-% der Kaffeemenge besteht, während die feine Fraktion den Rest ausmacht, die zwei Fraktionen separat befeuchtet werden und gemäss Stufe b) derart eingeführt werden, dass die grobe Fraktion in dem Ende des Extrationsbehälters plaziert wird, wovon der Extrakt entnommen wird.

5. Verfahren nach Anspruch 4, dadurch **gekennzeichnet**, dass das Sieben unter Verwendung eines Siebes mit einer Maschengrösse von 2-4 mm vorgenommen wird.

6. Verfahren nach einem der vorhergehenden Ansprüche, dadurch **gekennzeichnet**, dass durch ein Regulieren der dem Extraktionsbehälter zugeführten Extraktionsflüssigkeit die Extraktion mit einer Flüssigkeitsströmung von 20-50 m/h durchgeführt wird, berechnet auf Basis der Flüssigkeitsmenge, die durch den Extraktionsbehälter läuft und des Areals eines zur Strömungsrichtung durch den Extraktionsbehälter rechtwinkeligen Schnittes, wobei das Vorhandensein des Kaffees nicht in Betracht gezogen wird.

7. Verfahren nach einem der vorhergehenden Ansprüche, bei welchem der Extraktionsbehälter Teil einer Batterie mehrerer Extraktionsbehälter ist, die in bekannter Weise derart serienverbunden sind, dass heisses Wasser unter Druck in den Extraktionsbehälter mit jenem Kaffee geleitet wird, der in der längsten Zeit extrahiert wurde, während der fertige Extrakt aus dem Behälter entnommen wird, der zuletzt mit befeuchtetem Kaffee gefüllt wurde, dadurch **gekennzeichnet**, dass das Wasser bei einer Temperatur von 160-190°C zugeleitet wird, und dass der Kaffee aus dem Extraktionsbhälter nach Extraktion von 45-60 Gew.-% dessen Trockenstoffes bei einer Extraktionszeit von 1-2 1/2 Stunden entnommen wird.

## Revendications

1. Procédé d'extraction de café torréfié et moulu dans un extracteur, procédé dans lequel le café est préalablement mouillé avant d'être transféré à l'extracteur, **caractérisé** par le fait que
a) le café est mouillé par incorporation d'eau à une température entre 20 et 100°C pour obtenir un contenu en eau de 20 à 50% en poids,
b) le café mouillé est transféré dans un extracteur de forme allongée, afin d'en remplir essentiellement celui-ci,
c) le gaz et la vapeur d'eau sont évacués de l'extracteur afin d'obtenir une pression se situant entre environ 600 millibar et une valeur correspondant à la pression de vapeur d'eau à la température atteinte par le café mouillé, par suite de l'incorporation selon l'étape a),
d) sans autre évacuation de gaz et de vapeur d'eau, un liquide aqueux chaud d'extraction est introduit à une extrémité de l'extracteur évacué, afin de le remplir, et l'extraction est effectuée à des températures au dessus de 100°C,
et par le fait que
e) un extrait aqueux comprenant aussi bien les composants volatils de saveur que les composants non volatils du café est retiré à l'autre extrémité de l'extracteur.

2. Procédé selon la revendication 1, **caractérisé** par le fait que pour le mouillage selon l'étape a), on utilise de l'eau à une température de 50 à 100°C.

3. Procédé selon les revendications 1 ou 2, **caractérisé** par le fait que lors de l'évacuation de l'extracteur selon l'étape c), la pression est momentanément réduite à une valeur correspondant à la pression de vapeur d'eau atteinte par le café mouillé, par suite de l'incorporation selon l'étape a).

4. Procédé selon les revendications 1, 2 ou 3, **caractérisé** par le fait qu'avant le mouillage selon l'étape a), le café torréfié et moulu est passé au tamis pour être trié en une fraction grossière et une fraction fine, la fraction grossière constituant 1 à 10% en poids de la quantité de café, tandis que la fraction fine en constitue le reste, et par le fait que les deux fractions sont mouillées séparément et sont introduites, selon l'étape b), de manière telle que la fraction grossière se situe à l'extrémité de l'extracteur par laquelle on retire l'extrait.

5. Procédé selon la revendication 4, **caractérisé** en ce que le tamisage est effectuée à l'aide d'un tamis à mailles de 2 à 4 mm.

6. Procédé selon l'une quelconque des revendications précédentes, **caractérisé** par le fait que sous régulation de la quantité de liquide d'extraction alimentant l'extracteur, l'extraction est effectuée avec un écoulement liquide de 20 à 50 m/h, calculé sur la base de la quantité de liquide passant à travers l'extracteur et de la surface d'une section perpendiculaire au trajet d'écoulement à travers l'extracteur, la presence du café étant laissée lors de considération.

7. Procédé selon l'une quelconque des revendications précédentes et dans lequel l'extracteur fait partie d'une batterie de plusieurs extracteurs reliés en série de manière en soi connue si bien que de l'eau chaude sous pression est introduite dans l'extracteur contenant le café qui a été extrait sur la plus longue période de temps, tandis que l'extrait est retiré de l'extracteur qui a été le dernier à être rempli de café mouillé, **caractérisé** en ce que l'eau est introduite à une température de 160 à 190°C et en ce que le café est sorti de l'extracteur après extraction de 45 à 60% en poids de son poids en matière solide, pour une durée d'extraction de 1 heure à 2h30.
